# EUROPEAN PATENT APPLICATION

(11) **EP 2 077 463 A1**
(43) Date of publication of application: **08.07.2009**
(21) Application number: 08164707.5
(22) Date of filing: 19.09.2008
(51) Int. Cl.: G02F 1/1335

(54) **LCD with improved contrast ratio and apparatus comprising such a LCD**

(30) Priority: 27.12.2007 US 17170 P
(71) Applicant: TPO Displays Corp., Miao-Li County (TW)
(72) Inventor: Hekstra, Gerben Johan, 5581 HM Waalre (NL); Dessaud, Nathalie Magali Danielle, 5655 AE Eindhoven (NL)
(74) Representative: Ketelaars, Maarten F.J.M.

(57) **Abstract**

An LCD device with an LCD cell. The cell has a liquid crystal layer (100), a base panel adjacent to the liquid crystal layer (100) and a top panel adjacent to the liquid crystal layer (100) but opposing the base panel. The base panel has a first polarizer (POL1) arranged to polarize incident light into a first direction (x). The top panel has a color filter (CF) with one or more color filter portions so as to produce light with a predetermined color, a second polarizer (POL2) on a side of the color filter (CF) opposite to the liquid crystal layer (100) and designed to polarize incident light into a second direction (y) perpendicular to the first direction (x), and a third polarizer (POL3) located between the color filter (CF) and the liquid crystal layer (100) and designed to polarize incident light into the second direction (y).

## Description

### Background of the invention

### 1. Field of the invention

The present invention relates to LCD with improved contrast ratio and apparatus comprising such a LCD.

### 2. Prior art.

A liquid crystal display (LCD) is one of the most widely used flat panel displays. An LCD includes two panels provided with field-generating electrodes such as pixel electrodes and a common electrode and a liquid crystal (LC) layer sandwiched between those panels. The LCD displays images by applying voltages to field-generating electrodes to generate an electric field in the LC layer, which determines orientations of LC molecules in the LC layer to adjust polarization of incident light.

The need to increase the color gamut of displays makes multi-primary displays interesting. One of the recent developments is a RGBY display which has a red (R), green (G), blue (B) and yellow (Y) color filter portion in the color filter of the LCD pixel. Such RGBY displays are interesting for color rendering since they have a wider color gamut than RGB or RGBW LCDs. Moreover, they have a lower power consumption than RGB LCDs.

The materials and processes of the red, green and blue color filter portions have been optimised to make sure the diffusion of light through the color filter is being reduced. Some depolarization occurs in the red, green and blue color filter portions but to an acceptable level.

However no yellow pigments are available to render a suitable yellow color filter portion. Nowadays, they show a substantial amount of diffusion which results in depolarization of incident polarized light. This reduces the contrast ratio (CR) and the color gamut drastically.

Still, RGBY or RGyGcB are among the most promising multi-primary displays to allow a good rendering of natural surface colors. For instance, Sanyo-Epson presented an RGyGcB display (ChromaRich technology) which showed improved color gamut. This display has been used in the Epson P-3000 and P-5000 line of photo viewers. However, tests have shown that the yellow color filter is still depolarising the light and therefore may be unacceptable for LCD applications.

It is observed that E. Peeters, e.a., disclose various materials that can be used for in-cell polarizers such as: polarizers based on lyotropic liquid crystalline dyes or in-situ photo-polymerization of highly ordered (smectic) guest-host systems. Such guest-host systems may be based on reactive liquid crystal diacrylates. Photo-polymerization may be obtained by doping such diacrylates with dichroic dye molecules, e.g., as present in dichroic azo dye [1,2]. E. Peeters, e.a., disclose the idea to use such in-cell polarizers as a replacement for traditional polarizers on the outside of an LCD cell. They do not disclose or suggest to use such in-cell polarizers in addition to traditional outside polarizers.

### Brief summary of the invention

The object of the invention is to provide an LCD device that has at least an improved contrast ratio compared with the prior art devices.

To that effect, the invention provides an LCD device as claimed in claim 1.

By providing an additional in-cell polarizer, the amount of light passing through the yellow color filter in the off-state is reduced, thus rendering a better contrast ratio.

In an embodiment, the invention uses a high contrast, thin film in-cell polarizer made by photo-polymerization of guest-host mixtures, e.g. by cross linking of smectic guest-host mixtures.

These polarizers, which can be used as in-cell polarizers, are very competitive polarizers compared to the common polarizers, such as H-sheet polarizers based on stretched poly (vinylalcohol) impregnated with iodine or doped with dichroic dyes used nowadays in most displays.

They show various advantages: they are thinner, have more freedom as to choice of substrates (birefringent material possible), are more robust (substrate is at the exterior of the display), have easy control over polarization direction, have no cutting waste, have an improved thermal stability, result in lower parallax issues due to a shorter optical stack, and have a high resistance to humidity.

### Brief description of the drawings

The invention will be explained in detail with reference to some drawings that are only intended to show embodiments of the invention and not to limit the scope. The scope of the invention is defined in the annexed claims and by its technical equivalents.

The drawings show:
Figure 1 is a block diagram of a LCD device;
Figure 2a exemplarily shows the profile of a LCD pixel cell;
Figure 2b exemplarily shows the profile of components of a LCD pixel cell;
Figures 3a and 3b, respectively, schematically show one pixel (or cell) of a prior art color LCD device;
Figures 4a and 4b show embodiments of a pixel of an LCD device in accordance with the invention.

### Detailed description of embodiments

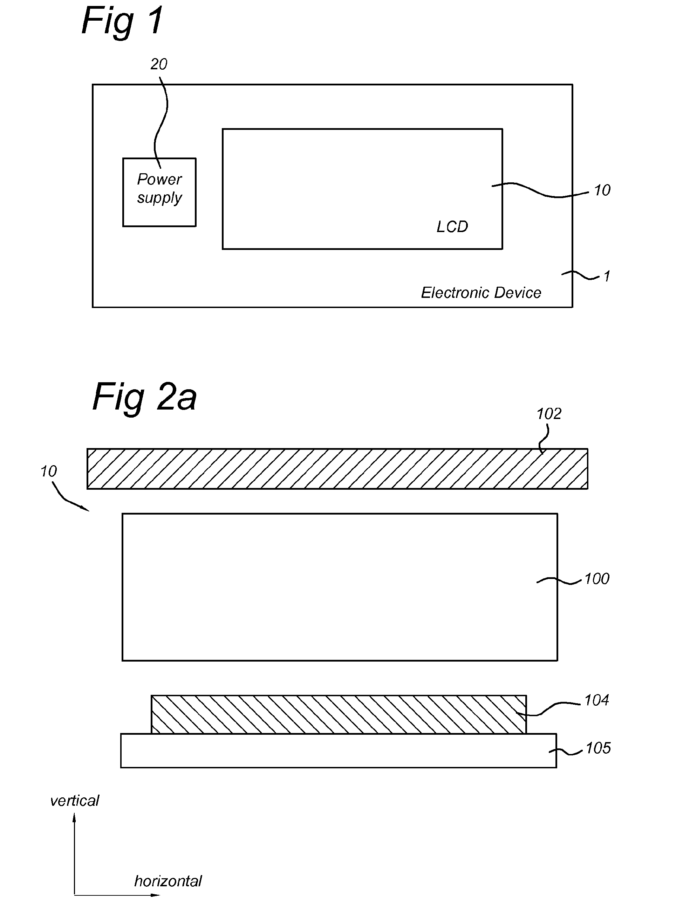

Figure 1 is a diagram of an electronic device 1 with an LCD 10 according to an embodiment of the present invention. The electronic device 1 also has a power supply 20 connected to the LCD 10 to supply power to the LCD 10. In this embodiment, the LCD 10 is a color image display integrated into the electronic device 1. As known to those skilled in the art, the electronic device 1 can be a mobile phone, a personal digital assistant (PDA), a notebook computer, a desktop computer, a television, a car media player, a portable video player, digital camera, global positioning system (GPS), car navigation system, avionics display, etc.

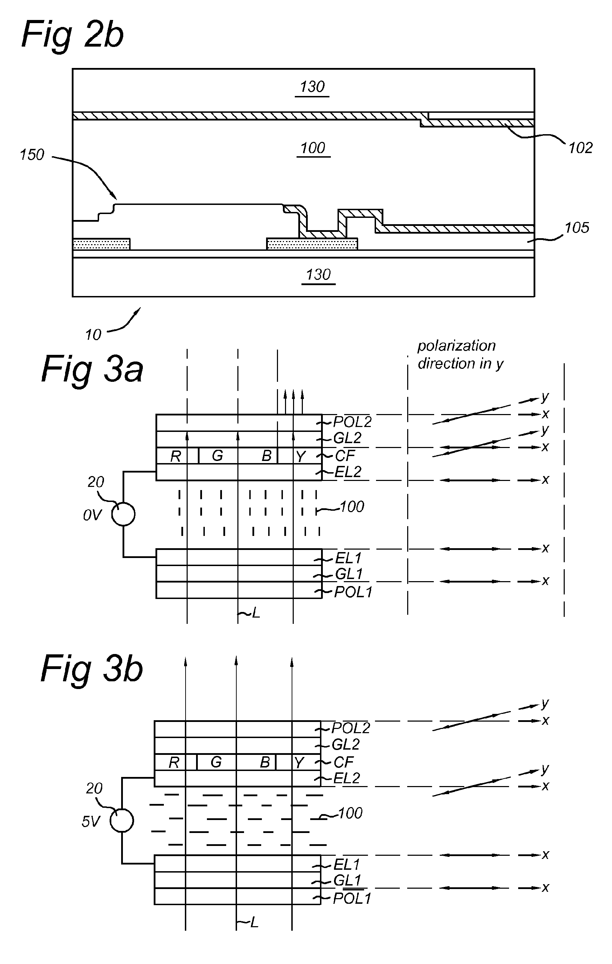

According to an embodiment of the present invention, figure 2a further illustrates the profile of LCD 10, which includes a liquid crystal (LC) layer 100, a common electrode 102, and a pixel electrode 104. The electrode 104 is arranged on a substrate 105. LCD 10 may have many cells, but figure 2a illustrates only one cell of LCD 10 to explain the present invention. In this example, the pixel cell, corresponding to a sub pixel, can have a size of 40 µm x 40 µm and a thickness of 4.15 µm. Note that the pixel cell can have other sizes like 20 µm x 20 µm, 30 µm x 30 µm, 39.5 µm x 39.5 µm, or 30umx61um (or other unsquare designs) and the thickness can be any suitable one greater than 1.5 µm. As shown, the LC layer 100, where the LC molecules are vertical aligned (not shown in figure 2a; "vertical" is to be understood in the orientation of the drawing shown in figure 2a), is sandwiched between the common electrode 102 and the pixel electrode 104. The electrode 104, placed on the TFT (TFT = thin film transistor, not shown) side, is provided for switching the liquid crystal layer 100. Note that the LCD 10 may include other components, such as substrates 130, color filters (not shown in figure 2b), and TFT (thin film transistors) 150, see figure 2b.

The common electrode 102, the LC layer 100, and the pixel electrode set 104 form a liquid crystal capacitor, which stores applied voltages after turn-off of the TFT(s) (not shown). The pixel electrode set 104, supplied with the data voltages, generates electric fields in cooperation with the common electrode 102, which reorients liquid crystal molecules of the liquid crystal layer 100. The common electrode 102, which can be a conventional common electrode, can be made of ITO or IZO. The pixel electrode 104 can be made of ITO or IZO too.

Figures 3a and 3b, respectively, schematically show one pixel (or cell) of a prior art color LCD device to further illustrate the problem to be solved by the present invention. Figure 3a shows the pixel having a base panel with a polarizer POL1, a glass layer GL1 on top of the polarizer POL1 and an electrode EL1 on top of the glass layer GL1. Moreover, the pixel has a top panel with a polarizer POL2, a glass layer GL2 below the polarizer POL2, a color filter CF below the glass layer GL2 and an electrode EL2 below the color filter CF. Polarizer POL1 has a polarizing direction perpendicular to the polarizing direction of polarizer POL2. In the example shown, polarizer POL1 polarizes light in the x-direction and polarizer POL2 in the y-direction. The color filter CF, as shown in figure 3a, comprises 4 portions, i.e., a red portion R, a green portion G, a blue portion B and a yellow portion Y. It is observed that the terms "on top of" and "below" refer to the orientation as shown in the drawing and are not intended to limit the scope of the present invention.

The power supply 20 is connected between the electrode EL1 and electrode EL2. In the embodiment shown in figure 3a, the LCD device is of the so-called "vertical alignment" (VA) type, i.e., the molecules in the liquid crystal 100 are vertically aligned when the power supply voltage as provided by power supply 20 is low, e.g., 0 V. "Vertically" refers to a direction perpendicular to the surface of the electrodes EL1, EL2. In this state, the pixel should be "black", i.e., should not be transparent for any light. It is observed that the technique of the invention is not restricted to VA but can also be applied for other LC modes, like FFS (Fringe Field Switching), IPS (In-Plane Switching), ECB (Electrically Controlled Birefringence), OCB (optically compensated bend).

Figure 3a shows that light L falls on the bottom of the base panel. Light L falls on polarizer POL1 and becomes linearly polarized in the x-direction, as shown at the right hand side of the schematic pixel. The light L then passes glass layer GL1 and electrode EL1 and remains linearly polarized in the x-direction.

The light L then passes liquid crystal 100 unobstructed due to the molecules in liquid crystal 100 being vertically aligned. After having passed liquid crystal layer 100, the light L is still linearly polarized in the x-direction.

Then, the light L passes electrode EL2 and enters color filter CF. The portions of the light passing the red R, green G, and blue B portions, respectively, of the color filter CF are filtered to render a red, green, blue light portion, respectively. These three portions are still substantially linearly polarized in the x-direction because, nowadays, the materials used for these red R, green G, and blue B portions do not substantially alter the polarization.

However, materials used to date for the yellow portion Y are such that they diffuse passing light, resulting in a depolarizing effect. This is schematically shown at the right hand side of the pixel where, at the junction between yellow color filter portion Y and glass layer GL2, the polarization of the light having passed yellow color filter portion Y has both a x-component and a small y-component. I.e., there light L has become elliptically polarized.

All light L passes glass layer GL2 unaltered and arrives at the junction between glass layer GL2 and polarizer POL2. Polarizer POL2 blocks all light polarized in the x-direction. Therefore, all light that has passed the red R, green G, and blue B portions, respectively, will be completely blocked by polarizer POL2. I.e., downstream from these red R, green G, and blue B portions, respectively, the pixel is "black" (does not transmit any light). However, polarizer POL2 passes the y-component of the depolarized portion of light L that has passed yellow color filter portion Y. So, the pixel will transmit a small amount of (polarized) yellow light and will not appear entirely "black". This is unacceptable for most applications.

Figure 3b shows the same pixel as figure 3a. However, in the state shown in figure 3b, the power supply 20 now supplies a voltage sufficient to horizontally align the molecules in liquid crystal 100. This may, e.g., be 5 V. The effect of this horizontal alignment is that the direction of polarization of light L, which is polarized in the x-direction when it enters liquid crystal 100, is rotated by 90° (π/2). So when leaving liquid crystal 100 light L is polarized in the y-direction, as indicated at the right hand side of the pixel in figure 3b.

Again, the red R, green G, and blue B portions of color filter CF will substantially not alter the polarization direction of light L and will, thus, transmit red, green and blue light portions respectively all polarized in the y-direction. Polarizer POL2 will pass these red, green and blue light portions without altering them. Yellow color filter portion Y will, again, diffuse the light portion passing this portion resulting in some depolarization. Thus, the light having passed yellow portion Y will have a small component in the x-direction. However, most of the yellow light portion will be polarized in the y-direction. The latter portion will also pass polarizer POL2 without being altered. Only the yellow portion that is polarized in the x-direction will be obstructed by polarizer POL2. Still, most of the light will be transmitted by the pixel rendering the pixel a white color.

It will be understood by the person skilled in the art that, in reality, electrode EL 2 will be split in several electrode portions, i.e., one portion for each color filter portion R, G, B, Y. Each one of these electrode portions will be connected to a distinct TFT that is arranged to separately switch each one of these electrode portions on a separate voltage in order to switch each one of the color filter portions on and off by either vertically or horizontally aligning the molecules in the respective portions of the liquid crystal 100. The amount of light passed through the respective portions of the liquid crystal 100 can be controlled by controlling the voltage level applied to electrodes EL1 and EL2. Thus, the pixel can transmit any desired color.

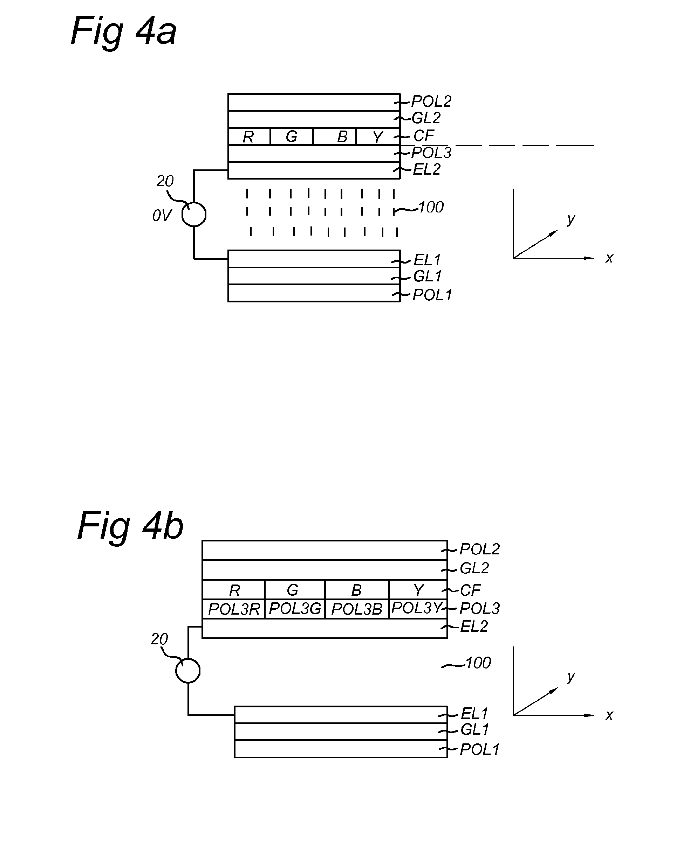

Figures 4a and 4b show embodiments of a pixel of an LCD device that solves the problem of insufficient black level, and therefore unacceptable contrast ratio.

Components of the pixel shown in figures 4a and 4b that are the same as in figures 3a and 3b are referenced with the same reference numbers. The difference between the pixel in figures 4a, 4b and the pixel in figures 3a, 3b is that the pixel in figures 4a, 4b comprises an additional polarizer POL3 in the top panel upstream from the color filter CF. Such a polarizer is called an "in-cell polarizer".

Ideally, additional polarizer POL3 should have the same polarizing direction as polarizer POL2. I.e, polarizer POL3 should only transmit light portions polarized in the y-direction and block the x-component of incident light completely. However, to date, in-cell polarizers having a 100% polarizing capacity in one direction are not yet known. So, in practice, some light polarized in the x-direction will still pass additional polarizer POL3.

In the embodiment shown in figure 4a, the additional polarizer POL3 is provided between electrode EL2 and color filter CF, and covers all color filter portions R, G, B, and Y.

The way the pixel of figure 4a operates is as follows. If power supply 20 provides an operating voltage of 0 V, all molecules in liquid crystal 100 are vertically aligned and liquid crystal 100 does not alter the passing light that is polarized in the x-direction. In that state, all light after having passed transparent electrode EL2 is at least partly blocked by additional polarizer POL3. The amount of light polarized in the x-direction and passing additional polarizer POL3 depends on the polarizing capacity of additional in-cell polarizer POL3. Some light polarized in the x-direction will still pass additional polarizer POL3. Portions of that remaining light passing the red R, green G, and blue B color filter portions will arrive at polarizer POL2 substantially without being altered as to their polarization direction. I.e., they are still polarized in the x-direction. Then, these remaining portions will be entirely blocked by polarizer POL2. However, the portion of the light entering the yellow color filter portion Y will, again, be diffused rendering a yellow, elliptically polarized light portion with both a yellow x-component and a yellow y-component. The yellow y-component will pass the polarizer POL2. So, still some amount of yellow light may be transmitted by the pixel. However, compared to the pixel of figures 3a, 3b the contrast ratio is improved drastically.

In the on-state, the power supply 20 will provide a high voltage, e.g. 5 V which renders the molecules in liquid crystal 100 to become horizontally aligned. The effect of this horizontal alignment is that the direction of polarization of light L, which is polarized in the x-direction when it enters liquid crystal 100, is rotated by 90° (π/2).So when leaving liquid crystal 100 light L is polarized in the y-direction, As explained with reference to figure 3b, in this state, all light will not be obstructed when passing any of the color filter portions R, G, B, Y and polarizer POL2. However, also polarizer POL3 will not obstruct this light. So, in the on-state, pixel will show a white light.

Again, in practice, as will be understood by the person skilled in the art that, in the embodiment of figure 4a, electrode EL2 will be split in several electrode portions, i.e., one portion for each color filter portion R, G, B, Y. Each one of these electrode portions will be connected to a distinct TFT that is arranged to separately switch each one of these electrode portions on a separate voltage in order to switch each one of the color filter portions on and off by either vertically or horizontally aligning the molecules in the respective portions of the liquid crystal 100. The amount of light passing through the respective portions of the liquid crystal 100 can be controlled by controlling the voltage level applied to electrodes EL1 and EL2. Thus, the pixel can transmit any desired color.

Thus, the invention provides an LCD of which the pixels have an improved black level. However, also the white level is improved and therefore the LCD according to the invention increases the contrast ratio and the color gamut.

The embodiment shown in figure 4a has one polarizer POL3 below all four color filter portions R, G, B, Y. Such a single polarizer may be made of a broadband polarizer material, i.e., a material that is transparent for a broad frequency spectrum of the incident light L. Of course, such a broadband polarizer material should at least be transparent for the colors red, green, blue and yellow. Such materials could be selected from the group of materials comprising: polarizers based on lyotropic liquid crystalline dyes or in-situ photo-polymerization of highly ordered guest-host systems. Such guest-host systems may be smectic guest-host systems and may be based on reactive liquid crystal diacrylates. Photo-polymerization may be obtained by doping such diacrylates with dichroic dye molecules, e.g., as present in dichroic azo dye. More information about these materials can be obtained from [1,2].

In an alternative embodiment, the polarizer POL3 is split into at least two portions per pixel, as shown in figure 4b. Figure 4b shows an example where polarizer POL3 has been split into four different portions: a portion POL3R, a portion POL3G, a portion POL3B, and a portion POL3Y. Each one of these polarizer portions POL3R, POL3G, POL3B, POL3Y is designed as a limited bandwidth polarizer. I.e., polarizer portion POL3R is designed to substantially transmit only light in the red frequency range. Polarizer portion POL3G is designed to substantially transmit only light in the green frequency range. Polarizer portion POL3B is designed to substantially transmit only light in the blue frequency range. Polarizer portion POL3Y is designed to substantially transmit only light in the yellow frequency range.

By the arrangement shown in figure 4b, each color filter portion will transmit light with a more limited bandwidth. This attributes to a better color gamut.

Instead of providing a separate polarizer portion POL3R, POL3G, POL3B, POL3Y for each one of the color filter portions R, G, B, Y, alternatively, two or three such separate polarizer portions may be provided. For instance, the polarizer portions POL3R, POL3G, POL3B may be one single portion made of a material being transparent to a broadband frequency spectrum including red, green and blue. However, other combinations are possible, depending on the available materials which may, for instance, be selected on ease of patterning into the proper configuration.

In the above embodiments, the polarizer POL3 has been shown to be located between the electrode EL2 and the glass layer GL2. However, alternatively, the polarizer POL3 may be located between the liquid crystal 100 and the electrode EL2.

The invention has been explained with reference to a R, G, B, Y LCD device but can equally be applied in any color LCD device using color filters. I.e., the invention as described here focuses on a yellow color filter, but the idea of making use of in-cell polarizers for any wavelength could also be of interest to traditional RGB (high contrast) displays or RGBX displays, where "X" means, e.g., Y=yellow, W=white, or any other color of the fourth color filter.

The LCD device according to the invention can be applied in mobile phones, personal digital assistants (PDA), notebook computers, desktop computers, televisions, car media players, portable video players, digital cameras, global positioning systems (GPS) as used in car navigation systems, avionics displays, etc. However, other applications may be true-color wide gamut displays, such as photo-viewers and photo-printer pre-viewers, where it is important that he gamut of the display matches the gamut of the photo paper, and that of the camera.

### References.

[1] E. Peeters, J. Lub, A.A. Steenbakkers and D.J. Broer, "High-Contrast Thin-Film Polarizers by Photo-Crosslinking of Smectic Guest-Host Systems", Advanced Materials, 2006, 18, 2412-2417.
[2] E. Peeters, J. Lub, W.P.M. Nijssen, J. Steenbakkers and D.J. Broer, "Thin Film Polarizers by In-Situ Photo-Polymerization of Highly Ordered Guest-Host Systems", EuroDisplay 2005, 165-167.

## Claims

1. An LCD device comprising at least one LCD cell comprising a liquid crystal layer (100), a base panel adjacent to said liquid crystal layer (100) and a top panel adjacent to said liquid crystal layer (100) but opposing said base panel, said base panel comprising a first polarizer (POL1) arranged to polarize incident light into a first direction (x), said top panel comprising a color filter (CF) comprising at least one color filter portions so as to produce light of a predetermined color, a second polarizer (POL2) arranged on a side of said color filter (CF) opposite to said liquid crystal layer (100) and arranged to polarize incident light into a second direction (y) perpendicular to said first direction (x), and a third polarizer (POL3) arranged between said color filter (CF) and said liquid crystal layer (100) and arranged to polarize incident light into the second direction (y).

2. LCD device according to claim 1, wherein said color filter (CF) comprises four color filter portions (R, G, B, Y) so as to produce substantially white light.

3. LCD device according to claim 1 or 2, wherein said third polarizer (POL3) comprises at least two third polarizer portions, each one of said at least two third polarizer portions being arranged to polarize incident light for a distinct set of one or more of said color filter portions.

4. LCD device according to claim 3, wherein said color filter comprises four color filter portions (R, G, B, Y) and said third polarizer (POL3) comprises four third polarizer portions, each one of said four third polarizer portions being arranged to polarize incident light for a distinct one of said four color filter portions (R, G, B, Y).

5. LCD device according to any of the preceding claims, wherein said top panel comprises an electrode (EL2), said third polarizer (POL3) being located between said electrode (EL2) and said color filter (CF).

6. LCD device according to any of the claims 1-5, wherein said top panel comprises an electrode (EL2), said third polarizer (POL3) being located between said electrode (EL2) and said liquid crystal layer (100).

7. LCD device according to any of the preceding claims, wherein said third polarizer (POL3) is selected from the group of materials comprising: polarizers based on lyotropic liquid crystalline dyes and polarizers based on in-situ photo-polymerization of guest-host systems.

8. LCD device according to claim 7, wherein said guest-host system is a smectic guest-host system.

9. LCD device according to claim 7 or 8, wherein said guest-host system is based on reactive liquid crystal diacrylates.

10. An apparatus comprising an LCD device according to any of the preceding claims.

11. Apparatus according to claim 10, wherein said apparatus is selected from the group comprising mobile phones, personal digital assistants (PDA), notebook computers, desktop computers, televisions, car media players, portable video players, digital cameras, car navigation systems, avionics displays, photo-viewers and photo-printer pre-viewers.
